# EUROPEAN PATENT SPECIFICATION

(11) **EP 1 556 415 B1**
(45) Date of publication and mention of the grant of the patent: **23.12.2009**
(21) Application number: 03754557.1
(22) Date of filing: 12.09.2003
(51) Int. Cl.: C08F 2/14, C08F 6/24

(54) **LOOP REACTOR APPARATUS AND POLYMERIZATION PROCESSES WITH MULTIPLE FEED POINTS FOR OLEFINS AND CATALYSTS**
SCHLAUFENREAKTORVORRICHTUNG UND POLYMERISATIONSVERFAHREN MIT MEHREREN ZUFUHRPUNKTEN FÜR OLEFINE UND KATALYSATOREN
REACTEUR EN BOUCLE ET PROCEDES DE POLYMERISATION COMPORTANT DES POINTS D'ALIMENTATION MULTIPLES POUR DES OLEFINES ET CATALYSEURS

(30) Priority: 13.09.2002 US 410367 P; 12.09.2003 US 660990
(43) Date of publication of application: 27.07.2005
(73) Proprietor: CHEVRON PHILLIPS CHEMICAL COMPANY LP, The Woodlands, TX 77380 (US)
(72) Inventor: HOTTOVY, John, D., Bartlesville, OK 74004 (US); ZELLERS, Dale, A., Bartlesville, OK 74006 (US); VERSER, Donald, W., Kingwood, TX 77339-3097 (US); BURNS, David, H., Kingwood, TX 77339-3097 (US)
(74) Representative: Nash, David Allan
(86) International application number: PCT/US2003/028827
(87) International publication number: WO 2004/024782

(56) References cited:
- EP-A2- 0 891 990
- WO-A-03/070365
- US-B1- 6 204 344
- US-B1- 6 239 235
- US-B1- 6 239 235
- US-B1- 6 319 997

## Description

### FIELD OF THE INVENTION

This invention relates to the polymerization of olefin monomers in a liquid medium, particularly in a large loop reactor used for slurry polymerization.

### BACKGROUND OF THE INVENTION

Polyolefins such as polyethylene and polypropylene may be prepared by particle form polymerization, also referred to as slurry polymerization. In this technique, feed materials such as monomer and catalyst are introduced to a reactor (such as a loop reactor), and a product slurry containing solid polyolefin particles in the liquid medium is taken off.

In continuous loop reactors, the various feed materials may be introduced to the loop reaction zone in various ways. For example, the monomer and catalyst may be introduced separately or together, and the monomer and catalyst may be mixed with varying amounts of diluent prior to introduction to the reaction zone. In the loop reaction zone, the monomer and catalyst become dispersed in the fluid slurry. As they circulate through the loop reaction zone in the fluid slurry, the monomer reacts at the catalyst site in a polymerization reaction. The polymerization reaction yields solid polyolefin particles in the fluid slurry.

EP-A-891990 discloses an olefin polymerization process wherein monomer, diluent and catalyst are circulated in a continuous loop reactor and the product slurry is recovered by means of a continuous product take off; inlets for monomer and make up diluent can enter the reactor at one location or at a plurality of locations. WO 03/070365 describes a loop reactor for slurry polymerization; the reactor may comprise multiple feed inlets for at least one of monomer, co-monomer, co-catalyst, diluent, polymer modifier, process additive or mixtures thereof.

Slurry polymerization in a loop reaction zone has proven commercially successful. The slurry polymerization technique has enjoyed international success with billions of pounds of olefin polymers being so produced annually. However, it is still desirable to design and build larger reactors.

Properties of the polymer are influenced by reactor conditions, including the concentration of monomer, during the polymerization process. In a loop polymerization process, the concentration of monomer will tend to decrease as monomer reacts to form polymer in the course of the polymerization process. In existing polymerization processes and loop reactors, the concentration of monomer has been maintained within acceptable ranges throughout the loop reaction zone with the use of a single monomer feed in the loop reactor.

The concentration of monomer in the loop reaction zone is often evaluated by measuring the concentration of monomer in the product slurry that is removed from the loop reaction zone. It is generally easier to measure monomer concentration outside the loop reaction zone than inside the loop reaction zone.

### BRIEF SUMMARY OF THE INVENTION

As one aspect, a slurry polymerization process is provided as indicated in claim 1. In this process, solid polyolefin particles are formed in a liquid medium. The process includes introducing an olefin monomer and a catalyst to the loop reaction zone. The catalyst must be capable of polymerizing the olefin monomer. The process also includes introducing the olefin monomer to the loop reaction zone through a plurality (two or more) of monomer feeds. The olefin monomer is introduced so that the concentration of the olefin monomer within the loop reaction zone is within a desired range. For example, by introducing the olefin monomer at multiple symmetrically-arranged feed locations, the olefin monomer concentration in a liquid diluent in the reactor may be held within a range of 1.05% or a smaller range. The variation of olefin monomer concentration around the reactor may be kept quite low, so that the standard deviation of the olefin monomer concentrations around the reactor is 0.4% or less. In some embodiments, there is at least one monomer feed per 244 m (800 feet) of reactor length, or at least one monomer feed per 68137 liters (18,000 gallons) of reactor volume.

The process may also include withdrawing a portion of the fluid slurry as an intermediate product through a plurality of product take-offs. The catalyst may be introduced through a plurality of catalyst feeds. Preferably, the monomer feeds and the product take-offs are symmetrically arranged around the loop reaction zone. The catalyst feeds may also be symmetrically arranged around the loop reaction zone.

The process also includes measuring the concentration of the olefin monomer in the withdrawn portion of the fluid slurry, and adjusting the introduction of the olefin monomer in response to the measured concentration. The introduction of olefin monomer may be adjusted so that a different amount of the olefin monomer is fed at one monomer feed than the amount of the olefin monomer fed at another monomer feed.

As another aspect, a loop reactor apparatus is provided as indicated in claim 8. The loop reactor apparatus includes a plurality of major segments, and a plurality of upper and lower minor segments. Each of the major segments is connected at an upper end to one of the upper minor segments, and is connected at a lower end by a smooth lower bend to one of the lower minor segments. In such fashion, the major and minor segments form a continuous flow path adapted to convey a fluid slurry. The flow path is substantially free from internal obstructions.

Alternatively the loop reactor apparatus may comprise a first major leg, a second major leg, a third major leg, a fourth major leg, a fifth major leg, a sixth major leg, a seventh major leg, and an eighth major leg. The apparatus may also comprise a plurality of minor segments, where each segment connects two of the major legs to each other, thereby forming a continuous flow path. The apparatus may include a first monomer feed attached to the first major leg; a first product take-off attached to the third major leg; a second monomer feed attached to the fifth major leg; a second product take-off attached to the seventh major leg; and at least one catalyst feed attached to one of the legs or segments.

The foregoing loop reactor apparatus includes at least two means for introducing an olefin monomer into the continuous flow path, a means for introducing a polymerization catalyst into the continuous flow path, and at least two means for removing a portion of the fluid slurry from the continuous flow path. The loop reactor apparatus also includes at least one means for measuring the concentration of olefin monomer in the removed portion of the fluid slurry. The measuring means is in fluid connection with the removing means. The loop reactor apparatus may also include a means for controlling the monomer introducing means. The measuring means provides a signal indicative of the measured concentration to the controlling means.

### BRIEF DESCRIPTION OF THE DRAWINGS

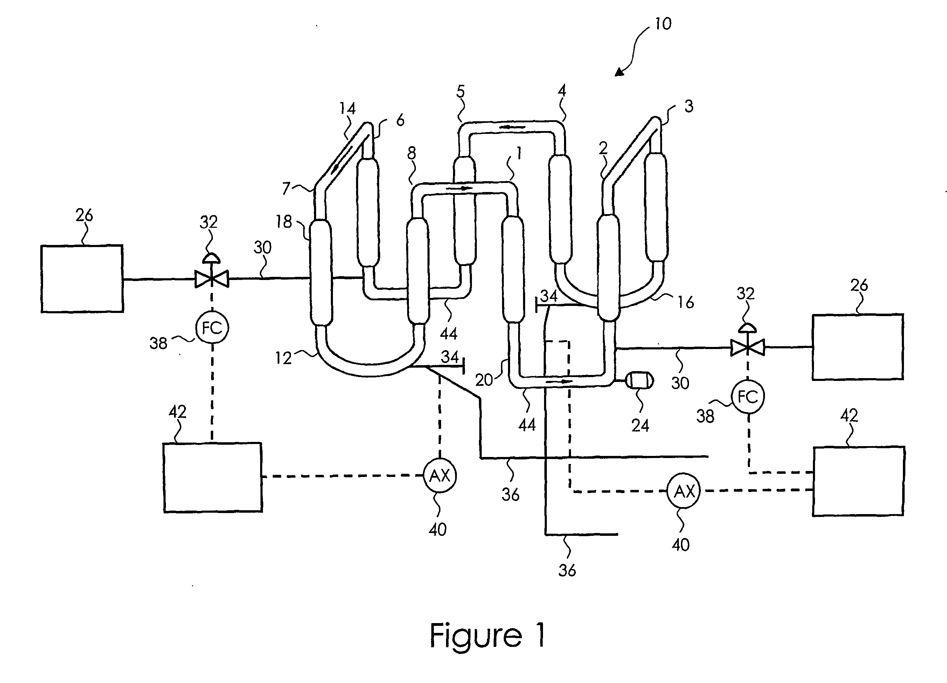

FIG. 1 is a schematic perspective view of a loop reactor having a plurality of monomer feeds, a plurality of catalyst feeds, and a plurality of product take-offs for withdrawing a portion of the slurry.

### DETAILED DESCRIPTION OF THE INVENTION

The present processes and apparatus are suitable for the homopolymerization of ethylene and the copolymerization of ethylene and a higher 1-olefin such as butene, 1-pentene, 1-hexene, 1-octene or 1-decene. A preferred process is the copolymerization of ethylene and, as a starting material, an amount of comonomer in the range of 0.01 to 10, preferably 0.01 to 5, more preferably 0.1 to 4 weight percent, wherein the comonomer is selected from the foregoing higher 1-olefins, and the weight percent is based on the total weight of ethylene and comonomer. (Such copolymers are still referred to as polyethylene). Alternatively, sufficient comonomer can be used as a starting material to give a resulting product polyolefin having an incorporated amount of comonomer in the range of 0.01 to 10, preferably 0.01 to 5, more preferably 0.1 to 4 weight percent.

The liquid medium may be a diluent for the solid polymer particles that is separate from and in addition to the unreacted monomers. Suitable diluents for the present processes are well known in the art and include hydrocarbons which are inert and liquid or are super critical fluids under slurry polymerization conditions. Suitable hydrocarbons include isobutane, propane, n-pentane, i-pentane, neopentane and n-hexane, with isobutane being especially preferred. Alternatively, the liquid medium may be the unreacted monomer itself. For example, the present processes and apparatus may also be adapted to propylene polymerization in loop reactors. In the case of bulk polymerization of propylene, there is no separate diluent with respect to the monomer, because the monomer (propylene) serves as the liquid medium. Of course, the concentration of the olefin monomer will be much higher than when a liquid diluent is also present.

Suitable catalysts are also well known in the art. Particularly suitable is chromium oxide on a support such as silica as broadly disclosed, for instance, in Hogan and Banks, U.S. Patent No. 2,825,721 (March 1958). Ziegler catalysts, metallocenes, and other well-known polyolefin catalysts, as well as cocatalysts, may be used. Preferably, only one catalyst is used for a given polymerization process, and the same catalyst is introduced at each of a plurality of catalyst feeds.

Additional details regarding loop reactor apparatus and polymerization processes may be found, for example, in U.S. Patent Nos. 4,674,290; 5,183,866; 5,455,314; 5,565,174; 6,045,661; 6,051,631; 6,114,501; and 6,262,191.

In a loop reaction zone where monomer is polymerized to form solid polymer particles in a diluent, the monomer concentration in the loop reaction zone will tend to vary as the fluid slurry flows around the loop reactor, at least in part due to the conversion of monomer to polymer as the desired result of the polymerization process. As the length of the loop reaction zone increases, the monomer concentration will tend to vary to a greater extent if the monomer is all fed to the loop reaction zone at one location, as it conventionally is. For example, in an 68137 liters (18,000-gallon) loop reactor being used for the slurry polymerization of ethylene, there is approximately 48,000 pounds (about 18,000 kilograms) of liquid with approximately 2,200 pounds (about 800 kilograms) of ethylene in the liquid. At a production rate of approximately 40,000 lbs/hr (about 15,000 kg/hr), the process consumes approximately 333 lbs (about 125 kg) of ethylene in the time it takes to flow around the reactor loop. The ethylene concentration in the loop is calculated to range between about 4.27 wt % just before the ethylene feed point to about 4.93 wt % just after the ethylene feed point. A 132489 liters (35,000-gallon) loop reactor may have the same diameter but may be about twice as long as an 68137 liters (18,000-gallon) loop reactor. At a production rate of about 88,000 lbs/hr (about 33,000 kg/hr), the process consumes about 1,467 pounds (about 550 kilograms) of ethylene. The reactor contains about 93,300 pounds (about 68,300 kilograms) of liquid with approximately 4,200 lbs (about 1,567 kg) of ethylene. In such a reactor, the ethylene concentration in the loop reactor is calculated to range from about 3.72 wt % just before ethylene feed point to about 5.28 wt % just after the ethylene feed point, if the ethylene is all introduced at a single feed point. This constitutes a relatively wide swing in ethylene concentration.

For some polyethylene products, such as a 0.55 melt index, 0.9505 density copolymer, it is desirable to maintain the ethylene concentration in the range of from about 4 wt % to about 5.5 wt % (which defines a range of 1.5 wt %). For other polyethylene products, such as a 15.5 high load melt index, 0.9360 density copolymer, it is desirable to maintain the ethylene concentration in the range of from about 1.7 wt % to about 2.7 wt % (which defines a range of 1.0 wt %). For most polyethylene products, it is desirable that the ethylene concentrations around the reactor define a range of about 0.65%, alternatively about 0.85% alternatively about 0.95%, alternatively about 1.05%. Alternatively, it is desirable to operate the process so that the ethylene concentration at any point in the reactor is within the standard deviation from the average ethylene concentration. Preferably, the ethylene concentrations around the reactor have a standard deviation of about 0.2%, alternatively less than 0.3%, alternatively less than 0.4%. The present process and apparatus are capable of providing and maintaining these desired ethylene concentrations.

A small amount of ethylene may also enter the reactor at diluent flush points. Such flush points are not considered "monomer feeds." Flush points include pump seal area(s), catalyst feed points, product take off points, and pressure relief points and they need to remain open for safe and reliable reactor operation with a minimum of polymer build up in such openings. This flush can contain a percentage of the ethylene that is in the reactor flash gas and recycled to the reactor. The amount of ethylene recycled into the reactor with the recycled diluent usually about 0 to 10 %, with 5 % being typical.

Excessive swings in ethylene concentration may slightly lower the allowable maximum operating temperature, because in the part of the reactor with higher ethylene concentration, the reaction rate would be higher than in the part of the reactor with lower ethylene concentration. For example, the reaction rate may be approximately 30% in some places. This approximation is based on the reaction rate being proportional to monomer concentration in the reactor. By using the present process and apparatus, the maximum operating temperature may be increased approximately by more than 3.0°F (1.7°C), and the polymerization process may be operated at a temperature of 218.5°F (103.6°C) or more for a polymer that otherwise had a reactor temperature maximum of 215.5°F (101.9°C). The maximum operating temperature is that where polymer softens and fouls the reactor, and it also is dependent on type of polymer, stability of the control system and ability of the reactor jacket to remove heat of polymerization.

In contrast to the polymerization process discussed in U.S. Patent No. 4,789,714, where an additional monomer feed was employed to initiate the formation of additional MWD modes, in the present process and apparatus, additional monomer feeds may be used to prevent the expansion of the molecular weight distribution of the polyolefin made by the process by maintaining the ethylene concentration at a consistent level. This allows the same high quality product to be made in a large reactor as has been obtained in smaller reactors. The present process and apparatus may be used to produce solid polyolefin particles having a molecular weight distribution that is unimodal.

Referring now to the drawings, FIG. 1 shows a loop reactor 10 having major segments 12, upper minor segments 14 and lower minor segments 16. The minor segments may simply be curved elbows that join the major segments. Preferably, the lower minor segments are relatively curved to facilitate continuous take-off of product slurry. In FIG. 1, the loop reactor has eight major segments, although the inventors contemplate that the present process and apparatus may be used with a loop reactor having a higher or lower number of major segments, for example, a loop reactor having four legs or twelve segments. It will be understood that the particular numbering of segments herein does not necessarily imply a priority to the legs, as the loop reactor is circular. FIG. 1 shows the major segments as the first leg 1, second leg 2, third leg 3, fourth leg 4, fifth leg 5, sixth leg 6, seventh leg 7, and eighth leg 8. The first through eighth legs are all surrounded with cooling jackets 18 for heat exchange, that is, for removing at least some of the heat of the polymerization reaction from the loop reactor and providing a means for controlling the temperature of the loop reactor contents.

The upper and lower minor segments define upper and lower zones of minor flow. Each segment or leg is connected to the next segment or leg by a smooth bend or elbow 20, thus providing a continuous flow path substantially free from internal obstructions. As depicted in Figure 1, some upper and lower minor segments may consist of smooth bends or elbows, so that the minor segment forms a continued curve. The fluid slurry is circulated by means of impeller (not shown) driven by motor 24.

Monomer (which may be mixed with a diluent) is supplied to the reactor through two monomer feeds (illustrated as the connection of conduit 30 to the loop reactor) from one or more monomer sources 26, which may be a fresh ethylene supply or unreacted ethylene recycled from the slurry taken off from the reactor. Conduits 30 are equipped with flow control valves 32 that control the amount of monomer fed to the loop reactor. The monomer feed may be any known means for feeding monomer to a reactor, such as a simple opening, a nozzle, a sparger, or other fluid distribution apparatus.

As shown in FIG. 1, two separate monomer control schemes are used to control the two separate monomer feeds. If only one control scheme were used to control multiple monomer feeds, there would be a risk that polymer build-up could cause all of the monomer flow to go through one feed. The control schemes shown in FIG. 1 control the monomer feed to the loop reactor based on the measured concentration of monomer in the portion of slurry withdrawn at a downstream take-off point. Alternatively, the monomer feed may be controlled based on the measured concentration of monomer in the portion of slurry withdrawn at a upstream take-off point or from an average of the measured concentration of monomer in the slurry from several take-off points. Alternatively, the monomer concentration may be measured in the flash gas after the two take-off streams are combined. Alternatively monomer concentration can be measured directly at one or more points in the reactor.

Conduits 30 may be adapted to provide flow of feedstock materials in addition to monomer, such as comonomer and/or make-up diluent. Flow control valves 32 are adjusted by flow rate controllers 38, which receive a control signal from a computer 42. Analysis transducers 40 are adapted to analyze samples of slurry from the loop reactor and to deliver, in response to the analysis of the monomer-containing stream, a monomer concentration signal to computer 42. Computer 42 receives as an input the monomer concentration signal and optionally other inputs, such as an operator entered signal which is representative of the desired monomer concentration. Although two computers (one for each monomer control scheme) are shown in FIG. 1, a single computer capable of individual control of the two or more control schemes may be employed. Separate control valves and loops for each monomer feed are to ensure a constant split (50/50 in case of an 8-leg, symmetrical arrangement). Each controller does not need to react to separate effluent monomer concentrations.

As shown in FIG. 1, the monomer feeds and product take-offs are arranged symmetrically around the loop reactor. An advantage of this symmetrical arrangement is that the monomer concentration may be expected to be approximately or exactly the same at each product take-off (assuming that the amount of monomer fed at each feed point is about the same and the loop reactor is functioning properly). It is easier to control the process if the monomer concentrations at the product take-offs are expected to be about the same.

Comonomer may also be introduced via conduit 30 or via another feed location. Preferably, a plurality of comonomer feeds are arranged symmetrically around the loop reactor and are part of a control scheme similar to (or incorporated into) the control scheme shown for the monomer feeds.

Catalyst is introduced via conduits to catalyst feeds 44 which each provide a zone (location) for catalyst introduction. In the embodiments shown in FIG. 1, the catalyst feeds 44 are also symmetrically arranged around the reactor. Alternatively or additionally, the process and apparatus disclosed in U.S. Patent No. 6,262,191 for preparing a catalyst mud and providing it a loop reaction (polymerization) zone may be used with the present process and apparatus.

Dash lines, which designate signal lines in the drawings, are electrical or pneumatic in this preferred embodiment. However, mechanical, hydraulic, or other signal means for transmitting information are also applicable. In almost all control systems, some combination of these types of signals will be used. However, the use of any other type of signal transmission, compatible with the process and equipment in use is within the scope of the invention.

The loop reactor apparatus of FIG. 1 further comprises means for removing a portion of the slurry from the reactor (product take-offs). The means for removing the slurry portion may be a settling leg, a hollow appendage for continuous take-off, or another conduit for removing the product slurry without substantial leakage or interference with loop reactor operation. Settling legs have long been used in this field and are described in U.S. Patent Nos. 3,293,000 and 4,613,484. In the embodiment shown in FIG. 1, elongated hollow appendages for continuously taking-off an intermediate product slurry are designated by reference character 34. Continuous take-off mechanism 34 is located in or adjacent to one of the lower horizontal reactor loop sections 16, and/or adjacent or on a connecting elbow 20. Additional detail regarding the continuous take-off mechanism is disclosed in Hottovy et al. U.S. Patent No. 6,239,235.

The withdrawn slurry portion is passed through conduit 36 to a means for separating the solid polyolefin particles from the diluent and unreacted monomer. Conduit 36 may include a surrounding conduit containing a heated fluid which provides indirect heating to the product slurry in conduit 36. Such an arrangement is referred to as flashline heating. The solid polyolefin particles are separated using a two-stage flash design, such as is broadly disclosed in Hanson and Sherk, U.S. Pat. No. 4,424,341 (Jan. 3, 1984). By using such a design, it is expected that 70 to 90 percent or more of the diluent can generally be recovered in a high pressure flash.

For example, in a vessel in which the polymer (fluff) is collected in the bottom by gravity and the diluent and unreacted monomer and co-monomer are separated and exit the top. The vessel operates at a pressure high enough such that substantially all of the exiting vapors can be condensed with cooling water and recycled back to reactor by means of a pump. Vaporized monomer diluent may be subject to further processing which includes condensation by simple heat exchange using a recycle condenser, and return to the system, without the necessity for compression, via recycle diluent line. Recycled monomer may be returned to monomer source 26.

### EXAMPLES

### Example 1

An 68137 liters (18,000-gallon) loop reactor is used for the slurry polymerization of ethylene. The pipe forming the loop reactor has a nominal diameter of 61 cm (24 inches) and is approximately 262 m (860 feet) in total length. There is approximately 48,000 pounds (about 18,000 kilograms) of liquid with approximately 2,200 pounds (about 800 kilograms) of ethylene in the liquid. At a reactor production rate of approximately 40,000 lbs/hr (about 15,000 kg/hr), the reactor consumes approximately 333 lbs (about 125 kg) of ethylene in the time it takes to flow around the reactor loop. The ethylene concentration in the loop reactor varies from about 4.27 wt % (2,200 pounds of ethylene minus one-half of 333 pounds, divided by 48,000 pounds of liquid contents in the reactor) just before the ethylene feed, to about 4.93 wt % (2,200 pounds of ethylene plus one-half of 333 pounds, divided by 48,000 pounds of liquid contents in the reactor) just after the ethylene feed.

### Comparative Example 2

A 132489 liters (35,000-gallon) loop reactor is used for the slurry polymerization of ethylene. This reactor has the same diameter but is about twice as long as the 68137 liters (18,000-gallon) loop reactor of Example 1. The reactor only has one ethylene feed. The reactor contams about 85,916 pounds (62,900 kilograms) of liquid with 3,437 lbs (1,282 kg) of ethylene. The reactor produces about 87,500 lbs/hr of polymer. The slurry takes approximately 48 seconds to flow completely around the 35,000-gallon loop reactor. In 60 seconds, the reaction consumes about 1,458 pounds (547 kilograms) of ethylene. In this reactor, the ethylene concentration in the loop reactor varies from about 3.32% wt % (3,437 pounds of ethylene minus one-half of 1167 pounds, divided by 85,916 pounds) just before the ethylene feed, to about 4.68% (3,437 pounds of ethylene plus one-half of 1167 pounds, divided by 85,916 pounds) just after the ethylene feed point.

### Example 3

Reactor characteristics of a 132489 liters (35,000-gallon) loop reactor such as that shown in FIG. 1 and process characteristics for the polymerization of ethylene are shown in Table 1. The INPUT column refers to values selected by the operator of the loop reactor; the OUTPUT column refers to values determined by the INPUT values and the nature of the reactor and process. Calculations of material balances for ethylene polymerization with one monomer feed (out of the scope of the claims) and with two monomer feeds (within the scope of the claims) are provided in Tables 2 and 3, respectively

**TABLE 1**

| REACTOR AND PROCESS CHARACTERISTICS | | | |
|---|---|---|---|
| | | INPUT | OUTPUT |
| **Reactor Dimensions** | | | |
| Inner Diameter Shell | (inches) cm | 56.039 (22.0625) | - |
| Flow Area | (square feet) m³ | - | 0.2464 (2.6548) |
| Total Leg Length | (feet) m | 493 (1,616) | - |
| Number Of Elbows | | 16 | |
| Elbow Radius | (feet) m | 1.8 (6.00) | - |
| Elbow Length | (feet) m | - | 2.87 (9.42) |
| Total Length Of Reactor | (feet) m | - | 535 (1,756) |
| Reactor Volume | (gallons) liters | 132,928 (35,116) | - |
| | | | |
| **Pump Section Properties** | | | |
| Reactor Solids | wt% | 48.0% | - |
| Reactor Temperature | (F) C | 101 (214.0) | - |
| Particle Solid Volume Fraction | | 0.91 | - |
| Solid Density | cc/gm | 0.9540 | - |
| | (ls/ft3) g/cm³ | - | 0,9531 (59.50) |
| Reactor Fluid Density | cc/gm | - | 0.409 |
| | (lbs/ft3) g/cm³ | 0.4094 (25.56) | - |
| Reactor Slurry Density | (lbs/ft3) g/cm³ | - | 0,5638 (35.1965) |
| | | | |
| **Reactor CTO Discharge** | | | |
| Production Rate | (lbs PE/hr) kg/ PE/hr | 39,689 (87,500) | - |
| CTO Solids | wt% | 50.0% | - |
| CTO Ethylene | wt% | 4.0% | - |
| Slurry Discharge Rate | (lbs/hr) kg/hr | - | 79,379 (175,000) |
| Liquids Discharge | (lbs/hr) kg/hr | - | 39,689 (87,500) |
| Ethylene Discharge | (lbs/hr) kg/hr | - | 1,588 (3,500) |
| | | | |
| **Reactor Feed and Contents** | | | |
| Ethylene Feed (Assume Homopolymer) | (lbs/hr) kg/hr | - | 41,277 (91,000) |
| Recycle Liquids Feed | (lbs/hr) kg/hr | - | 38,102 (84,000) |
| Reactor Slurry Amount | (lbs) kg | - | 74,944 (165,224) |
| Reactor Liquids Amount | (lbs) kg | - | 38,971 (85,916) |
| Reactor Solids Amount | (lbs) kg | - | 35,973 (79,308) |
| Reactor Ethylene Amount | (lbs) kg | - | 1,559 (3,437) |
| | | | |
| **Reactor Circulation And Reaction** | | | |
| Reaction Rate | (lbs/min) kg/min | | 661 (1,458) |
| Reaction Circulation Rate | gpm | 43,800 | |
| Reaction Circulation Rate | (ft3/min) m³/min | | 544 (5,856) |
| Velocity | (ft/min) m/min | | 672 (2,205) |
| Revolutions Per Minute | rpm | | 1.25 |
| Effective Leg Length | FOTO-WEAR | | 221 |
| Reaction Per Leg | (lbs/min) kg/min | | 82.5 (182) |

Table 2 shows calculated values for a 132489 liters (35,000-gallon) loop reactor in which ethylene monomer is fed to the reactor through one monomer feed located just after the pump. The right-most column indicates that the concentration of ethylene in the fluid slurry (expressed as the weight percent of ethylene in the fluid slurry) varies from 3.35% to 4.64%, a range of 1.11%, a mean of 3.73%, and a standard deviation of 0.41%

**TABLE 2**

| CALCULATIONS OF MATERIAL BALANCE FOR LOOP REACTOR HAVING ONE MONOMER FEED POINT (out of the scope of the claims) | | | | | | | |
|---|---|---|---|---|---|---|---|
| | Ethylene | Isobutane (all other liquids) | Total Liquids | Polyethylene | Total Slurry | Solids | Ethylene |
| | kg/min (lbs/min) | kg/min (lbs/min) | kg/min (lbs/min) | kg/min (lbs/min) | kg/min (lbs/min) | wt% | wt% |
| Pump | 1,628 (3,589) | 46,980 (103,574) | 48,608 (107,163) | 44,869 (98,920) | 93,478 (206,083) | 48.00% | 3.35% |
| Feed (1.29%) | (1,517) 688 | (1,400) 635 | (2,917) 1323 | | | | |
| Leg 2 Inlet | (5,106) 2,316 | (104,974) 47,615 | (110,080) 49,931 | (98,920) 44,869 | (209,000) 94,801 | 47.33% | 4.64% |
| Leg 3 Inlet | (4,923) 2,233 | (104,974) 47,615 | (109,898) 49,441 | (99,102) 44,952 | (209,000) 94,801 | 47.42% | 4.48% |
| Leg 3 Outlet | (4,741) 2,151 | (104,974) 47,615 | (109,715) 49,769 | (99,284) 45,035 | (209,000) 94,801 | 47.50% | 4.32% |
| CTO | 14.3 (31.5) | 316.5 (697.7) | 330.8 (729.2) | 330.8 (729.2) | 661.5 (1,458.3) | 50.00% | 4.32% |
| Leg 4 Inlet | (4,710) 2,136 | (104,277) 47,299 | (108,986) 49,435 | (98,555) 44,704 | (207,541) 94,139 | 47.49% | 4.32% |
| Leg 5 Inlet | (4,527) 2,053 | (104,277) 47,299 | (108,804) 49,353 | (98,738) 44,787 | (207,541) 94,139 | 47.57% | 4.16% |
| Leg 5 Outlet | (4,345) 1,971 | (104,277) 47,299 | (108,621) 49,270 | (98,920) 44,869 | (207,541) 94,139 | 47.66% | 4.00% |
| Feed (0%) | 0 | 0 | 0 | | | | |
| Leg 6 Inlet | (4,345) 1,971 | (104,277) 47,299 | (108,621) 49,270 | (98,920) 44,869 | (207,541) 94,139 | 47.66% | 4.00% |
| Leg 7 Inlet | (4,163) 1,888 | (104,277) 47,299 | (108,439) 49,187 | (99,102) 44,952 | (207,541) 94,139 | 47.75% | 3.84% |
| Leg 7 Outlet | (3,980) 1,805 | (104,277) 47,299 | (108,257) 49,105 | (99,284) 45,035 | (207,541) 94,139 | 47.84% | 3.68% |
| CTO | 12.2 (26.8) | 318.6 (702.4) | 330.8 (729.2) | 330.8 (729.2) | 661.5 (1,458.3) | 50.00% | 3.68% |
| Leg 8 Inlet | (3,954) 1,794 | (103,574) 46,980 | (107,528) 48,779 | (98,555) 45,157 | (206,083) 93,478 | 47.62% | 3.68% |
| Leg 1 Inlet | (3,771) 1,711 | (103,574) 46,980 | (107,345) 48,691 | (98,738) 44,787 | (208,083) 94,385 | 47.91% | 3.51% |
| Leg 1 Outlet | (3,589) 1,628 | (103,574) 46,980 | (107,163) 48,608 | (98,920) 44,863 | (206,083) 93,478 | 48.00% | 3.35% |

Table 3 shows calculated values for a 132489 liters (5,000-gallon) loop reactor in which ethylene is fed through two monomer feeds, one located just after the pump and the other located just after the bottom of the fifth reactor leg. In this reactor, the ethylene feeds and the product take-off points (CTOs) are symmetrically arranged. The right-most column in Table 3 indicates that the concentration of ethylene in the fluid slurry varies from 3.67 wt % to 4.32 wt. %, with a range of 0.65%, a mean of 3.74%, and a standard deviation of 0.21%.

**TABLE 3**

| CALCULATIONS OF MATERIAL BALANCE FOR LOOP REACTOR HAVING TWO MONOMER FEED POINTS (within the scope of the claims) | | | | | | | |
|---|---|---|---|---|---|---|---|
| | Ethylene | Isobutane (all other Liquids) | Total Liquids | Polyethylene | Total Slurry | Solids | Ethylene |
| | kg/min (lbs/min) | kg/min (lbs/min) | kg/min (lbs/min) | kg/min (lbs/min) | kg/min (lbs/min) | wt% | wt% |
| Pump | 1,786 (3,937) | 46,823 (103,227) | 48,608 (107,163) | 44,869 (98,920) | 93,478 (206,083) | 48.00% | 3.67% |
| Feed (0.65%) | (758) 344 | (700) 318 | (1,458) 661 | | | | |
| Leg 2 Inlet | (4,695) 2,130 | (103,927) 47,141 | (108,621) 49,270 | (98,920) 44,869 | (207,541) 94,139 | 47.66% | 4.32% |
| Leg 3 Inlet | (4,513) 2,047 | (103,927) 47,141 | (108,439) 49,187 | (99,102) 44,952 | (207,541) 94,139 | 47.75% | 4.16% |
| Leg 3 Outlet | (4,330) 1,964 | (103,927) 47,141 | (108,257) 49,105 | (99,284) 45,035 | (207,541) 94,139 | 47.84% | 4.00% |
| CTO | 13.2 (29.2) | 317.5 (700.0) | 330.8 (729.2) | 330.8 (729.2) | 661.5 (1,458.3) | 50.00% | 4.00% |
| Leg 4 Inlet | (4,301) 1,951 | (103,227) 46.823 | (107,528) 48,774 | (98,555) 44,704 | (206,083) 93,478 | 47.82% | 4.00% |
| Leg 5 Inlet | (4,119) 1,868 | (103,227) 46,823 | (107,345) 48,691 | (98,738) 44,787 | (206,083) 93,478 | 47.91% | 3.84% |
| Leg 5 Outlet | (3,937) 1,786 | (103,227) 46,823 | (107,163) 48,608 | (98,920) 44,869 | (206,083) 93,478 | 48.00% | 3.67% |
| Feed (0.65%) | (758) 344 | (700) 318 | (1,458) 661 | | | | |
| Leg 6 Inlet | (4,695) 2,130 | (103,927) 47,141 | (108,621) 49,270 | (98,920) 44,869 | (207,541) 94,139 | 47.66% | 4.32% |
| Leg 7 Inlet | (4,513) 2,047 | (103,927) 47,141 | (108,439) 49,187 | (99,102) 44,952 | (207,541) 94,139 | 47.75% | 4.16% |
| Leg 7 Outlet | (4,330) 1,964 | (103,927) 47,141 | (108,257) 49,105 | (99,284) 45,035 | (207,541) 94,139 | 47.84% | 4.00% |
| CTO | 13.2 (29.2) | 317.5 (700.0) | 330.8 (729.2) | 330.8 (729.2) | 661.5 (1458.3) | 50.00% | 4.00% |
| Leg 8 Inlet | (4,301) 1,951 | (103,227) 46,823 | (107,528) 48,774 | (98,555) 44,704 | (206,083) 93,478 | 47.82% | 4.00% |
| Leg 1 Inlet | (4,119) 1,868 | (103,277) 46,823 | (107,345) 48,691 | (98,738) 44,787 | (206,083) 93,478 | 47.91% | 3.84% |
| Leg 1 Outlet | (3,937) 1,786 | (103,227) 46,823 | (107,163) 48,608 | (98,920) 44,869 | (206,083) 93,478 | 48.00% | 3.67% |

Tables 2 and 3 (in particular, the calculation of ethylene concentration in the last column of each table) demonstrate that the use of a system having two monomer feeds leads to a more consistent monomer concentration within the loop reactor.

While this invention has been described in detail for the purpose of illustration, it is not to be construed as limited thereby, but is intended to cover all changes within the scope of the appended claims.

## Claims

1. A slurry polymerization process in which solid polyolefin particles are formed in a liquid diluent, the process comprising:
introducing a liquid diluent to a loop reaction zone;
introducing a catalyst to the loop reaction zone, the catalyst being capable of polymerizing an olefin monomer;
introducing the olefin monomer to the loop reaction zone through a plurality of monomer feeds, wherein the olefin monomer is introduced so that the concentration of the olefin monomer within the loop reaction zone is within a desired range;
polymerizing the olefin monomer to form a fluid slurry of solid polyolefin particles in the liquid diluent; and
withdrawing a portion of the fluid slurry as an intermediate product;
the process further comprising:
measuring the concentration of the olefin monomer in the withdrawn portion of the fluid slurry; and
adjusting the introduction of the olefin monomer in response to the measured concentration.

2. A process according to claim 1 wherein the portion of the fluid slurry is withdrawn through a plurality of product take-offs.

3. A process according to claim 1, wherein said fluid slurry has a plurality of monomer concentrations around the loop reaction zone, and the standard deviation of said plurality of monomer concentrations is equal to or less than 0.4 %.

4. A process according to claim 1, wherein the introduction of the olefin monomer is adjusted so that a different amount of the olefin monomer is fed at one monomer feed than the amount of the olefin monomer fed at another monomer feed.

5. A process according to claim 1 wherein said loop reaction zone has a volume of 35,000 gallons (132 m³) or more.

6. A process according to claim 1 wherein each of the monomer feeds is separately controlled.

7. A process according to claim 1 wherein the solid polyolefin particles have a molecular weight distribution that is unimodal.

8. A loop reactor apparatus comprising:
a plurality of major segments;
a plurality of upper minor segments;
a plurality of lower minor segments;
wherein each of the major segments is connected at an upper end to one of the upper minor segments, and is connected at a lower end by a smooth lower bend to one of the lower minor segments, such that the major segments and the minor segments form a continuous flow path adapted to convey a fluid slurry;
at least two means for introducing an olefin monomer into the continuous flow path;
means for introducing a polymerization catalyst into the continuous flow path; and
at least two means for removing a portion of the fluid slurry from the continuous flow path;
the apparatus further comprising:
at least one means for measuring the concentration of the olefin monomer in the removed portion of the fluid slurry, the measuring means being in fluid connection with the removing means.

9. The loop reactor apparatus of claim 8, comprising a means for controlling the monomer introducing means, and the measuring means provides a signal indicative of the measured concentration to the controlling means.

10. The loop reactor apparatus of claim 8, wherein:
the plurality of major segments comprises: a first major leg; a second major leg; a third major leg; a fourth major leg; a fifth major leg; a sixth major leg; a seventh major leg; and an eighth major leg;
the means for introducing an olefin monomer comprise a first monomer feed attached to said first major leg and a second monomer feed attached to the fifth major leg;
the means for removing a portion of the fluid slurry comprise a first product take-off attached to the third major leg and a second product take-off attached to the seventh major leg; and
the means for introducing a polymerization catalyst comprises at least one catalyst feed attached to one of said legs or segments.

11. The slurry polymerization process according to claim 1, wherein:
the catalyst is introduced to the loop reaction zone through a plurality of catalyst feeds,
the portion of the fluid slurry is withdrawn through a plurality of product take-offs, and
the monomer feeds, the catalyst feeds and the product take-offs are arranged symmetrically about the loop reactor.

## Patentansprüche

1. Verfahren zur Suspensionspolymerisation, in dem feste Polyolefinteilchen in einem flüssigen Verdünnungsmittel gebildet werden, umfassend
Zuführen eines flüssigen Verdünnungsmittels in eine Schlaufenreaktorzone;
Zuführen eines Katalysators in die Schlaufenreaktorzone, wobei der Katalysator fähig ist, ein Olefinmonomer zu polymerisieren;
Zuführen des Olefinmonomers in die Schlaufenreaktorzone über eine Anzahl Monomerversorgungen, wobei das Olefinmonomer so zugeführt wird, dass die Konzentration des Olefinmonomers in der Schlaufenreaktorzone innerhalb eines gewünschten Bereichs liegt;
Polymerisieren des Olefinmonomers, so dass eine flüssige Verschlämmung aus festen Polyolefinteilchen im flüssigen Verdünnungsmittel entsteht; und
Entnehmen eines Teils der flüssigen Verschlämmung als Zwischenprodukt;
wobei das Verfahren zudem umfasst
Messen der Konzentration des Olefinmonomers in dem entnommenen Teil der flüssigen Verschlämmung; und
Anpassen der Zuführung des Olefinmonomers als Reaktion auf die gemessene Konzentration.

2. Verfahren nach Anspruch 1, wobei der Teil der flüssigen Verschlämmung durch eine Anzahl Produktabnahmevorrichtungen entnommen wird.

3. Verfahren nach Anspruch 1, wobei die flüssige Verschlämmung eine Anzahl Monomerkonzentrationen in der Schlaufenreaktorzone hat und wobei die Standardabweichung der Anzahl Monomerkonzentrationen weniger oder gleich 0,4% ist.

4. Verfahren nach Anspruch 1, wobei die Zuführung des Olefinmonomers so angepasst ist, dass eine unterschiedliche Menge Olefinmonomer an einer Monomerversorgung zugeführt wird, als die Menge Olefinmonomer, die an einer anderen Monomerversorgung zugeführt wird.

5. Verfahren nach Anspruch 1, wobei die Schlaufenreaktorzone ein Volumen von 35.000 Gallonen (132 m³) oder mehr hat.

6. Verfahren nach Anspruch 1, wobei jede der Monomerversorgungen separat gesteuert wird.

7. Verfahren nach Anspruch 1, wobei die festen Polyolefinteilchen eine Molekulargewichtsverteilung haben, die unimodal ist.

8. Schlaufenreaktorvorrichtung, umfassend
eine Anzahl Hauptsegmente;
eine Anzahl oberer Nebensegmente;
eine Anzahl unterer Nebensegmente;
wobei die Hauptsegmente jeweils an einem oberen Ende mit einem der oberen Nebensegmente verbunden sind und an einem unteren Ende über eine glatte untere Biegung mit einem der unteren Nebensegmente verbunden sind, so dass die Hauptsegmente und die Nebensegmente einen durchgängigen Flussweg bilden, ausgelegt um eine flüssige Verschlämmung zu befördern;
mindestens zwei Mittel für die Zuführung eines Olefinmonomers in den durchgängigen Flussweg;
Mittel für die Zuführung eines Polymerisationskatalysators in den durchgängigen Flussweg;
mindestens zwei Mittel für die Entnahme eines Teils der flüssigen Verschlämmung aus dem durchgängigen Flussweg;
wobei die Vorrichtung zudem umfasst
mindestens ein Mittel zum Messen der Konzentration des Olefinmonomers im entnommenen Teil der flüssigen Verschlämmung, wobei das Mittel zum Messen in einer flüssigen Verbindung mit den Mitteln für die Entnahme steht.

9. Schlaufenreaktorvorrichtung gemäß Anspruch 8, umfassend ein Mittel für die Steuerung der Mittel für die Zuführung des Monomers, und das Mittel zum Messen liefert ein Signal an das Mittel für die Steuerung, das die gemessene Konzentration angibt.

10. Schlaufenreaktorvorrichtung gemäß Anspruch 8, wobei
die Anzahl Hauptsegmente umfasst einen ersten Hauptabschnitt; einen zweiten Hauptabschnitt; einen dritten Hauptabschnitt; einen vierten Hauptabschnitt; einen fünften Hauptabschnitt; einen sechsten Hauptabschnitt; einen siebten Hauptabschnitt; und einen achten Hauptabschnitt;
die Mittel für die Zuführung eines Olefinmonomers umfassen eine erste Monomerversorgung, die mit dem ersten Hauptabschnitt verbunden ist und eine zweite Monomerversorgung, die mit dem fünften Hauptabschnitt verbunden ist;
die Mittel für die Entnahme eines Teils der flüssigen Verschlämmung umfassen eine erste Produktabnahmevorrichtung, die mit dem dritten Hauptabschnitt verbunden ist und eine zweite Produktabnahmevorrichtung, die mit dem siebten Hauptabschnitt verbunden ist; und
das Mittel für die Zuführung eines Polymerisationskatalysators umfasst mindestens eine Katalysatorversorgung, die mit einem der Abschnitte oder Segmente verbunden ist.

11. Verfahren zur Suspensionspolymerisation gemäß Anspruch 1, wobei
der Katalysator durch eine Anzahl Katalysatorversorgungen der Schlaufenreaktorzone zugeführt wird,
der Teil der flüssigen Verschlämmung durch eine Anzahl Produktabnahmevorrichtungen entnommen wird, und
die Monomerversorgungen, die Katalysatorversorgungen und die Produktabnahmevorrichtungen symmetrisch am Schlaufenreaktor angeordnet sind.

## Revendications

1. Procédé de polymérisation en suspension dans lequel des particules solides de polyoléfine sont constituées dans un diluant liquide, le procédé comprenant :
introduire un diluant liquide dans une zone de réaction à boucle ;
introduire un catalyseur dans la zone de réaction à boucle, le catalyseur étant capable de polymériser un monomère oléfinique ;
introduire le monomère oléfinique dans la zone de réaction à boucle à travers une pluralité d'alimentations de monomère, où le monomère oléfinique est introduit de façon à ce que la concentration de monomère oléfinique dans la zone de réaction à boucle est dans une région désirée ;
polymériser le monomère oléfinique pour former une suspension fluide de particules solides de polyoléfine dans le diluant liquide ; et
enlever une partie de la suspension fluide comme produit intermédiaire ;
le procédé comprenant en plus :
mesurer la concentration du monomère oléfinique dans la partie enlevée de la suspension fluide ; et
ajuster l'introduction du monomère oléfinique en réponse à la concentration mesurée.

2. Procédé selon la revendication 1 dans lequel la partie de la suspension fluide est enlevée à travers une pluralité de dispositifs de tirage de produit.

3. Procédé selon la revendication 1 dans lequel ladite suspension fluide a une pluralité de concentrations de monomère autour de la zone de réaction à boucle et l'écart-type de ladite pluralité de concentrations de monomère est inférieur ou égal à 0,4%.

4. Procédé selon la revendication 1 dans lequel l'introduction du monomère oléfinique est ajustée de façon à ce qu'une quantité différente de monomère oléfinique est fournie à une alimentation de monomère, comparé à la quantité de monomère oléfinique fournie à une autre alimentation de monomère.

5. Procédé selon la revendication 1 dans lequel la zone de réaction à boucle a un volume de 35.000 gallons (132 m³) ou plus.

6. Procédé selon la revendication 1 dans lequel chacune des alimentations de monomère est contrôlée séparément.

7. Procédé selon la revendication 1 dans lequel les particules solides de polyoléfine ont une distribution de masse moléculaire qui est unimodale.

8. Appareillage de réacteur à boucle comprenant :
une pluralité de segments majeurs ;
une pluralité de segments mineurs supérieurs ;
une pluralité de segments mineurs inférieurs ;
dans lequel chacun des segments majeurs est connecté avec une extrémité supérieure à un des segments mineurs supérieurs, et est connecté avec une extrémité inférieure à un des segments mineurs inférieurs à travers un pli inférieur lisse, de façon que les segments majeurs et les segments mineurs forment une voie de passage continuelle adaptée à débiter une suspension fluide ;
au moins deux moyens pour introduire un monomère oléfinique dans la voie de passage continuelle ;
moyen pour introduire un catalyseur de polymérisation dans la voie de passage continuelle ;
au moins deux moyens pour enlever une partie de la suspension fluide de la voie de passage continuelle ;
l'appareillage comprenant en plus :
au moins un moyen pour mesurer la concentration du monomère oléfinique dans la partie enlevée de la suspension fluide, le moyen pour mesurer étant en connexion fluide avec les moyens pour enlever.

9. Appareillage de réacteur à boucle selon la revendication 8 comprenant un moyen pour contrôler les moyens pour introduire le monomère, et le moyen de mesurer fournit un signal indiquant le concentration mesurée au moyen pour contrôler.

10. Appareillage de réacteur à boucle selon la revendication 8, dans lequel :
la pluralité de segments majeurs comprend : un premier tronçon majeur ; un deuxième tronçon majeur ; un troisième tronçon majeur ; un quatrième tronçon majeur ; un cinquième tronçon majeur ; un sixième tronçon majeur ; un septième tronçon majeur ; et un huitième tronçon majeur ;
les moyens pour introduire un monomère oléfinique comprennent une première alimentation de monomère attachée audit premier tronçon majeur et une deuxième alimentation de monomère attachée audit cinquième tronçon majeur ;
les moyens pour enlever une partie de la suspension fluide comprennent un premier dispositif de tirage de produit attaché audit troisième tronçon majeur et un deuxième dispositif de tirage de produit attaché audit septième tronçon majeur ; et
le moyen pour introduire un catalyseur de polymérisation comprend au moins une alimentation de catalyseur attachée à un desdits tronçons ou segments.

11. Appareillage de réacteur à boucle selon la revendication 8, dans lequel :
le catalyseur est introduit dans la zone de réaction à boucle à travers une pluralité d'alimentations de catalyseur ;
la partie de la suspension fluide est enlevée à travers une pluralité de dispositifs de tirage de produit, et
les alimentations de monomère, les alimentations de catalyseur et les dispositifs de tirage de produit sont arrangés symétriquement au réacteur à boucle.
